# FASCICULE DE BREVET EUROPEEN

(11) **EP 0 868 649 B1**
(45) Date de publication et mention de la délivrance du brevet: **27.02.2002**
(21) Numéro de dépôt: 96942192.4
(22) Date de dépôt: 09.12.1996
(51) Int. Cl.: G01B 11/27, B22D 11/20

(54) **PROCEDE D'ALIGNEMENT DE CYLINDRES A AXES PARALLELES**
VERFAHREN ZUR AUSRICHTUNG PARALLELER WALZEN
METHOD FOR ALIGNING CYLINDERS HAVING PARALLEL AXES

(30) Priorité: 21.12.1995 BE 9501056
(43) Date de publication de la demande: 07.10.1998
(73) Titulaire: CENTRE DE RECHERCHES METALLURGIQUES-CENTRUM VOOR RESEARCH IN DE METALLURGIE Assoc. sans but lucratif-Ver. zonder winstoogmerk, 1000 Bruxelles (BE)
(72) Inventeur: SCHYNS, Marc, B-4851 Gemmenich (BE); CRAHAY, Jean, B-4970 Francorchamps (BE)
(74) Mandataire: Van Malderen, Michel
(86) Numéro de dépôt international: BE9600129
(87) Numéro de publication internationale: WO9723764

(56) Documents cités:
- WO-A-88/09913
- WO-A-94/14030
- FR-A- 2 644 715
- US-A- 4 298 281

## Description

La présente invention concerne un procédé d'alignement de cylindres à axes parallèles.

II existe de très nombreux domaines industriels qui font appel à des cylindres à axes parallèles. C'est notamment le cas des installations dans lesquelles un produit allongé se déplace suivant une trajectoire prédéterminée, de manière généralement continue sur une distance relativement longue. Dans l'industrie sidérurgique, ce type de situation se rencontre aussi bien dans les machines de coulée continue ou les laminoirs que dans des engins plus sophistiqués comme des fours de traitement thermique ou des lignes de revêtement de bandes d'acier. L'industrie papetière, les secteurs des matières plastiques, du verre flotté et des métaux non ferreux utilisent également de multiples équipements comportant des cylindres à axes parallèles.

La qualité du produit fabriqué, en particulier sa précision dimensionnelle, dépend pour une large part de l'exactitude et de la précision de sa trajectoire dans les engins de fabrication et de transport. La précision et la reproductibilité de cette trajectoire doivent être d'autant plus grandes que les exigences de qualité imposées au produit sont plus sévères.

Un facteur important pour le maintien de la qualité requise est la conservation du parallélisme des axes des cylindres successifs assurant le transport du produit. Ce parallélisme peut cependant disparaître pour différentes raisons telles que l'usure des paliers et/ou des tourillons des cylindres, ou des déplacements de leurs structures d'appui. II importe donc de contrôler et éventuellement de corriger la position relative de cylindres appelés à coopérer, afin d'assurer et de maintenir un parallélisme aussi parfait que possible de leurs axes de rotation.

D'un point de vue géométrique, un défaut de parallélisme entre deux axes peut se décomposer en une déviation dans un plan horizontal et une déviation dans un plan vertical.

Dans une installation parcourue par une bande d'acier par exemple, la plupart des cylindres sont horizontaux et la bande qu'ils supportent effectue fréquemment des déplacements verticaux d'un cylindre au suivant. Dans ce cas, une déviation dans un plan horizontal entraîne un décentrage de la bande par rapport à sa trajectoire prédéterminée et des difficultés de bobinage ultérieur; une déviation dans un plan vertical se traduit par un défaut de planéité de la bande. Une déviation quelconque correspondant à un manque de parallélisme de deux cylindres entraine une combinaison de ces deux défauts.

A l'heure actuelle, le contrôle de l'alignement des cylindres est réalisé en deux phases: tout d'abord on règle la hauteur relative des supports pour obtenir le cylindre dans un plan horizontal; ce premier réglage est effectué à l'aide de niveaux à bulle d'air de haute précision. Ensuite, le cylindre est déplacé tout en étant maintenu horizontal de façon à le rendre perpendiculaire à l'axe de la ligne. Ce second réglage, qui est le plus compliqué, est effectué au moyen d'un théodolite. Ce dernier appareil suppose de viser la surface du cylindre à aligner en un ou plusieurs points et sous des angles bien définis. Elle nécessite dès lors le démontage de tous les composants qui gênent la visée. Il en résulte des mises au point longues et délicates : mise à l'arrêt des installations, démontage des périphériques, réglages au théodolite, remontage des périphériques. En outre, certains cylindres sont difficiles d'accès; c'est le cas des cylindres de lignes de recuit situés dans des fours ou celui des cylindres de ligne d'électrodéposition, immergés dans des cuves.

La méthode de réglage est donc lente, coûteuse, nécessite l'intervention de personnel extérieur et n'est même pas applicable à tous les cylindres.

" On connaît par le document US-A-4,298,281 un système à laser pour l'alignement de rouleaux d'un convoyeur. Le procédé d'alignement proposé ici consiste à créer, par un faisceau laser, une direction de référence commune, parallèle à l'axe horizontal du convoyeur, mais extérieure aux rouleaux à aligner. Chacun des rouleaux est ensuite, séparément et successivement, rendu perpendiculaire à cette direction de référence commune.

Le document FR-A-2 644 715 révèle également un procédé d'alignement d'organes, tels que des rouleaux d'une machine de coulée continue, par rapport à une direction rectiligne matérialisée par un faisceau laser. Cette direction rectiligne constitue une direction de référence commune, extérieure aux organes à aligner, et par rapport à laquelle ces organes sont successivement alignés."

La présente invention a pour objet de proposer un procédé d'alignement de cylindres à axes parallèles, qui ne présente pas les inconvénients précités et qui permet en outre d'améliorer la précision de la mesure des positions des cylindres. De ce fait, le procédé proposé ici permet d'améliorer la qualité des produits se déplaçant sur ces cylindres, ainsi que la productivité des lignes de traitement.

Contrairement à la pratique actuelle, qui consiste à rendre chaque cylindre perpendiculaire à l'axe de la ligne, l'objet de la présente invention consiste à rendre tous les cylindres parallèles à une direction de référence; ceci a pour conséquence un meilleur parallélisme des cylindres.

Conformément à la présente invention, un procédé d'alignement de cylindres à axes parallèles, dans lequel on détermine l'écart angulaire entre l'axe d'au moins un cylindre et une direction de référence et on règle la position dudit cylindre pour réduire ledit écart, est caractérisé en ce que l'on relève la direction de l'axe d'un premier cylindre, considérée comme direction de référence, en ce que l'on transporte ladite direction de référence au moins jusqu'à proximité d'un deuxième cylindre, en ce que l'on détermine l'orientation de l'axe dudit deuxième cylindre et en ce que l'on en déduit l'écart angulaire existant entre la direction de l'axe dudit deuxième cylindre et ladite direction de référence, ainsi que les déplacements quantifiés à appliquer aux supports des cylindres.

Comme on l'a rappelé plus haut, ledit écart angulaire entre les axes de deux cylindres horizontaux peut, d'une manière générale, se décomposer en :
- une déviation horizontale, correspondant à une rotation de l'axe dudit second cylindre autour d'un axe vertical, et
- une déviation verticale, correspondant à une rotation de l'axe dudit second cylindre autour d'un axe horizontal qui lui est perpendiculaire.

Idéalement, la direction de référence, constituée par la direction de l'axe dudit premier cylindre, est transportée en restant rigoureusement parallèle à elle-même jusqu'à proximité du deuxième cylindre.

En pratique, cette direction de référence est matérialisée par sa position par rapport à un système de mesure capable de conserver une ou des directions fixes en cours de translation. Un tel système peut être constitué d'un gyroscope.

Après transport du système de mesure jusqu'à proximité du cylindre à régler, on connaît les variations de direction qu'ils a subies et on peut en déduire quelle est l'orientation de la droite, correspondant initialement à la direction de référence, après translation. On détermine alors les écarts angulaires totaux entre ladite droite transportée et l'axe du cylindre à aligner, ainsi que les corrections à effectuer pour aligner ce cylindre.

Suivant une caractéristique supplémentaire, ces variations d'orientation peuvent être enregistrées par des moyens électroniques qui, par comparaison avec les données correspondant à la direction de référence, permettent de déterminer à tout instant l'écart angulaire de ladite droite au cours de son transport.

D'une manière générale, on transporte ladite direction de référence aussi près que possible du deuxième cylindre.

La comparaison de la direction de référence transportée et de l'axe du cylindre s'effectue de différentes manières :
- en appuyant le système de mesure, par l'intermédiaire d'une ou plusieurs pièces en forme de "vé";
- en matérialisant la direction de référence transportée par l'axe d'un petit laser ou l'axe d'une lunette autocollimatrice et en fixant un miroir de renvoi perpendiculaire à l'axe du cylindre. Ce miroir est soit appuyé contre le cylindre via une ou des pièces en "vé", soit posé sur une surface transversale du cylindre, perpendiculaire à son axe. Dans ce cas, les écarts entre la direction de référence transportée et l'axe du cylindre sont lus par la déviation du faisceau laser réfléchi ou par le système autocollimateur. Cette disposition est préférée quand il est malaisé ou risqué de disposer le système de mesure contre le cylindre : risque de chocs mécaniques ou d'influences thermiques ou chimiques, ...; c'est le cas des cylindres dans les fours de traitement thermique, dans le lignes d'électrodéposition ou de décapage notamment.

Dans le cadre de la présente invention, le transport de ladite direction de référence peut être effectué à l'aide de tout type de gyroscope, mécanique ou optique.

La manipulation d'un gyroscope mécanique n'est cependant pas toujours aisée, en raison notamment de son poids et de sa sensibilité aux vibrations.

Un gyroscope optique s'avère à cet égard plus maniable : il est nettement plus léger et aussi plus robuste et moins sensible aux chocs, car il ne comporte pas de pièce mobile.

D'une façon connue en soi, un gyroscope ne définit par une direction absolue, mais il indique des variations angulaires. Un gyroscope à trois axes mesure, éventuellement en continu, les variations angulaires de la direction de référence par rapport à trois axes, au cours de son transfert.

Ces variations angulaires sont introduites dans un calculateur relié à la tête de détection contenant le gyroscope et la position finale du gyroscope indique un écart angulaire, par rapport à trois axes, qui exprime le manque de parallélisme entre la direction initiale, dite de référence, et la direction finale du gyroscope.

Si la direction initiale correspond à l'axe d'un premier cylindre et la direction finale à celui d'un deuxième cylindre, l'écart angulaire mesuré traduit le manque de parallélisme des axes de ces deux cylindres, en considérant que lesdits cylindres sont géométriquement parfaits.

Dans le cas où la direction finale est directement l'axe du deuxième cylindre, c'est-à-dire si le gyroscope est posé directement sur le deuxième cylindre, il est possible de régler la position de ce cylindre pour annuler l'écart angulaire constaté et ainsi assurer le parallélisme entre les deux cylindres.

Lorsque le deuxième cylindre n'est pas directement accessible à la pose du gyroscope, on transporte la direction de référence à proximité du deuxième cylindre en plaçant le gyroscope avec un écart angulaire déterminé, de préférence nul, par rapport à la direction de référence initiale. On définit une direction liée parallèlement à l'axe du deuxième cylindre et on mesure en au moins deux points la distance séparant ladite direction de référence transportée et ladite direction liée parallèlement à l'axe du deuxième cylindre. On règle ensuite la position du deuxième cylindre pour annuler les différences de distance mesurées et éventuellement ledit écart angulaire prédéterminé.

Le procédé de l'invention permet d'assurer le parallélisme de deux cylindres avec une précision atteignant 0,02 mm/m. Ce niveau de précision est nécessaire particulièrement dans les installations traitant des bandes d'acier de faible épaisseur, où une variation de l'épaisseur acquiert rapidement une grande importance.

Le procédé de l'invention peut aussi s'appliquer au contrôle du parallélisme de cylindres faisant partie d'une structure distincte, rigide, mais pouvant être déplaçable en bloc, telle qu'un cadre à plusieurs cylindres dans un accumulateur à bande.

Un autre avantage du procédé de l'invention est sa rapidité d'utilisation, sans nécessiter de longues procédures de mise en oeuvre. Le procédé de l'invention s'applique aisément à des cylindres difficilement accessibles ou exposés à des ambiances agressives.

## Revendications

1. Procédé d'alignement de cylindres à axes parallèles, dans lequel on détermine l'écart angulaire entre l'axe d'au moins un cylindre et une direction de référence et on règle la position dudit cylindre pour réduire ledit écart, **caractérisé en ce que** l'on relève la direction de l'axe d'un premier cylindre, considérée comme direction de référence, **en ce que** l'on transporte ladite direction de référence au moins jusqu'à proximité d'un deuxième cylindre, **en ce que** l'on détermine l'orientation de l'axe dudit deuxième cylindre et **en ce que** l'on en déduit l'écart angulaire existant entre la direction de l'axe dudit deuxième cylindre et ladite direction de référence.

2. Procédé suivant la revendication 1, **caractérisé en ce que** l'on détecte les variations d'orientation subies, au cours de son transport, par la droite représentant initialement ladite direction de référence, et **en ce que** l'on détermine l'écart angulaire final entre ladite droite et ladite direction de référence.

3. Procédé suivant la revendication 2, **caractérisé en ce que** l'on détermine ledit écart angulaire final dans un plan vertical.

4. Procédé suivant l'une ou l'autre des revendications 2 et 3, **caractérisé en ce que** l'on détermine ledit écart angulaire final dans un plan horizontal.

5. Procédé suivant l'une ou l'autre des revendications 1 à 4, **caractérisé en ce que** l'on transporte ladite direction de référence au moyen d'un gyroscope.

6. Procédé suivant la revendication 5, **caractérisé en ce que** l'on utilise un gyroscope optique à trois axes.

7. Procédé suivant l'une ou l'autre des revendications 5 et 6, **caractérisé en ce que** l'on pose ledit gyroscope optique sur ledit deuxième cylindre, **en ce que** l'on détermine l'écart angulaire entre l'orientation finale dudit gyroscope et la direction de référence initiale, et **en ce que** l'on règle la position dudit deuxième cylindre pour annuler ledit écart angulaire.

8. Procédé suivant l'une ou l'autre des revendications 5 et 6, **caractérisé en ce que** l'on installe ledit gyroscope à proximité dudit deuxième cylindre avec un écart angulaire déterminé par rapport à la direction de référence initiale, **en ce que** l'on définit une direction liée parallèlement à l'axe dudit deuxième cylindre, **en ce que** l'on mesure en au moins deux points la distance séparant ladite direction de référence transportée et ladite direction liée parallèlement à l'axe dudit deuxième cylindre, et **en ce que** l'on règle la position dudit deuxième cylindre pour annuler les différences de distance mesurées auxdits deux points.

9. Procédé suivant l'une ou l'autre des revendications 5 et 6, **caractérisé en ce qu'**on compare la direction de référence transportée par le gyroscope et l'axe du deuxième cylindre en matérialisant la direction de référence par l'axe d'un faisceau laser ou celui d'un autocollimateur, **en ce qu'**on pose un miroir sur le deuxième cylindre perpendiculairement à l'axe dudit deuxième cylindre, et **en ce qu'**on mesure l'écart entre les faisceaux laser incident et réfléchi.

## Patentansprüche

1. Verfahren zum Ausrichten von Zylindern mit parallelen Achsen, Verfahren bei welchem man die Winkelabweichung zwischen der Achse von mindestens einem Zylinder und einer Referenzrichtung bestimmt und man die Position des besagten Zylinders regelt, um die besagte Abweichung zu vermindern, **dadurch gekennzeichnet, dass** man die Richtung der Achse eines ersten Zylinders aufnimmt, welche als Referenzrichtung betrachtet wird, und dass man die Referenzrichtung mindestens bis in die Nähe eines zweiten Zylinders transportiert, dass man die Orientierung der Achse des zweiten Zylinders bestimmt und dass man daraus die Winkelabweichung herleitet, welche zwischen der Richtung der Achse des zweiten Zylinders und der Referenzrichtung besteht.

2. Verfahren gemäß Anspruch 1, **dadurch gekennzeichnet, dass** man die Veränderungen der Orientierung ausfindig macht, welche die Gerade, die am Anfang die Referenzrichtung dargestellt hat, im Verlauf ihres Transportes erlitten hat, und dass man die endgultige Winkelabweichung zwischen der Geraden und der Refererizrichtung bestimmt.

3. Verfahren gemäß Anspruch 2, **dadurch gekennzeichnet, dass** man die endgültige Winkelabweichung in einer vertikalen Ebene bestimmt.

4. Verfahren gemäß dem einen oder anderen der Ansprüche 2 und 3, **dadurch gekennzeichnet, dass** man die endgültige Winkelabweichung in einer horizontalen Ebene bestimmt.

5. Verfahren gemäß dem einen oder anderen der Ansprüche 1 bis 4, **dadurch gekennzeichnet, dass** man die Referenzrichtung unter Zuhilfenahme eines Gyroskops transportiert.

6. Verfahren gemäß Anspruch 5, **dadurch gekennzeichnet, dass** man einen optischen Gyroskop mit drei Achsen benutzt.

7. Verfahren gemäß dem einen oder anderen der Ansprüche 5 und 6, **dadurch gekennzeichnet, dass** man den optischen Gyroskop auf den zweiten Zylinder stellt, dass man die Winkelabweichung zwischen der endgültigen Orientierung des Gyroskops und der anfänglichen Referenzrichtung bestimmt und dass man die Position des zweiten Zylinders regelt, um die Winkelabweichung zu annullieren.

8. Verfahren gemäß dem einen oder anderen der Ansprüche 5 und 6, **dadurch gekennzeichnet, dass** man den optischen Gyroskop in der Nähe des zweiten Zylinders einrichtet, mit einer bestimmten Winkelabweichung in Bezug auf die anfängliche Referenzrichtung, dass man eine Richtung definiert, die parallel an die Achse des zweiten Zylinders gebunden ist, dass man an mindestens zwei Punkten die Entfernung misst, welche die transportierte Referenzrichtung und die parallel an die Achse des zweiten Zylinders gebundene Richtung voneinander trennt und dass man die Position des zweiten Zylinders regelt, um die an den zwei Punkten gemessenen Entfernungsdifferenzen zu annullieren.

9. Verfahren gemäß dem einen oder anderen der Ansprüche 5 und 6, **dadurch gekennzeichnet, dass** man die mit dem Gyroskop transportierte Referenzrichtung und die Achse des zweiten Zylinders vergleicht indem man die Referenzrichtung durch die Achse eines Laserstrahls oder diejenige eines Autokollimators materialisiert, dass man einen Spiegel auf den zweiten Zylinder stellt, senkrecht zu der Achse des zweiten Zylinders, und dass man den Abstand zwischen den einfallenden und den reflektierten Laserstrahlen misst.

## Claims

1. Method for the alignment of cylinders having parallel axes, in which the angular deviation between the axis of at least one cylinder and a reference direction is determined and the position of said cylinder is adjusted in order to reduce said deviation, **characterized in that** the direction of the axis of a first cylinder is recorded, said direction being considered as the reference direction, **in that** said reference direction is transported at least into the vicinity of a second cylinder, **in that** the orientation of the axis of said second cylinder is determined, and **in that** deduced from this is the angular deviation existing between the direction of the axis of said second cylinder and said reference direction.

2. Method according to Claim 1, **characterized in that** the variations in orientation which are experienced, during its transport, by the straight line initially representing said reference direction are detected, and **in that** the final angular deviation between said straight line and said reference direction is determined.

3. Method according to Claim 2, **characterized in that** said angular final deviation is determined in a vertical plane.

4. Method according to either of Claim 2 and 3, **characterized in that** said angular final deviation is determined in a horizontal plane.

5. Method according to any one of claims 1 to 4, **characterized in that** said reference direction is transported by means of a gyroscope.

6. Method according to claim 5, **characterized in that** a triaxial optical gyroscope is used.

7. Method according to either one of claims 5 and 6, **characterized in that** said optical gyroscope is placed on said second cylinder, **in that** the angular deviation between the final orientation of said gyroscope and the initial reference direction is determined, and **in that** the position of said second cylinder is adjusted in order to cancel said angular deviation.

8. Method according to either one of claims 5 and 6, **characterized in that** said gyroscope is installed in the vicinity of said second cylinder, with a specific angular deviation in relation to the initial reference direction, **in that** a direction linked parallel to the axis of said second cylinder is defined, **in that** the distance separating said transported reference direction and said direction linked parallel to the axis of said second cylinder is measured at least at two points, and **in that** the position of said second cylinder is adjusted in order to cancel the distance differences measured at said two points.

9. Method according to either one of claims 5 and 6, **characterized in that** the reference direction transported by the gyroscope and the axis of the second cylinder are compared by embodying the reference direction by the axis of a laser beam or that of an autocollimator, **in that** a mirror is placed on the second cylinder perpendicularly to the axis of said second cylinder, and **in that** the deviation between the incident and the reflected laser beams is measured.
